# EUROPEAN PATENT SPECIFICATION

(11) **EP 1 815 962 B1**
(45) Date of publication and mention of the grant of the patent: **30.09.2009**
(21) Application number: 07001521.9
(22) Date of filing: 24.01.2007
(51) Int. Cl.: B29C 44/12, B29C 45/00, B29C 47/10, B29C 47/00, B29C 44/34, B29C 44/60, B29C 47/38

(54) **Molding method of a fiber filler reinforced resin molded article**
Verfahren zum Formen eines Gegenstandes von mit Glasfasern verstärktem Harzmaterial
Méthode de moulage d'un article en matériau à base de résine renforcée par des fibres de verre

(30) Priority: 02.02.2006 JP 2006026306
(43) Date of publication of application: 08.08.2007
(73) Proprietor: Mazda Motor Corporation, Aki-gun Hiroshima 730-8670 (JP)
(72) Inventor: Ogawa, Junichi, Aki-gun Hiroshima 730-8670 (JP); Kaneko, Mitsuharu, Aki-gun Hiroshima 730-8670 (JP); Ichihara, Youhei, Aki-gun Hiroshima 730-8670 (JP); Tochioka, Takahiro, Aki-gun Hiroshima 730-8670 (JP)
(74) Representative: Müller-Boré & Partner Patentanwälte

(56) References cited:
- EP-A1- 0 431 388
- US-A- 5 707 571
- US-A1- 2003 003 291

## Description

The present invention relates to a molding method according to claim 1 and apparatus according to claim 8 of a fiber filler reinforced foam resin molded article.

A resin molded article that is made from a foam resin material has been recently used widely for the purpose of weight reduction and the like. A molding method of such a foam resin molded article is generally known, in which a super critical fluid (SCF) as a physical foaming agent is previously supplied to a thermoplastic resin, and then the resin is injected into a cavity (a space in a mold) for foaming with a pressure reduction.

Herein, in order to purse further weight reduction, a resin molded article that is reinforced with a fiber such as a glass fiber to increase strength and rigidity has been also developed. In a molding method of such a fiber filler reinforced foam resin molded article, the resin containing the reinforcement fiber is plasticized and kneaded (molten) in a cylinder of an injection unit by using a screw (a process before injecting into the mold), so that the reinforcement fiber can be mixed well in the resin. Then, the super critical fluid is supplied to the molten resin with pressing to and maintaining a certain pressure, which is followed by injecting the resin into the cavity for foaming with the pressure reduction.

US Patent Application Publication No. 2004/0253335 A1 discloses a molding method in which there is provided a gas supply nozzle for supplying the super critical fluid or a foaming agent to a portion just downstream of a ring-shaped check valve that is provided as a pressure-maintaining element at the injection molding screw. Herein, the ring-shaped check valve restricts a flow in an upstream direction, thereby maintaining a downstream pressure of a substance.

US-A-2003 000 3291 discloses a method according to the preamble of claim 1 and US-A-5 707 571 an apparatus according to the preamble of claim 8.

In a case where a fiber filler reinforced foam resin molded article is made with the conventional molding method disclosed in the above-described publication, there is a problem in that at a plasticizing stage by agitating and kneading the reinforcement fiber and resin, the reinforcement fiber is cut and broken by the screw, so the resin molded article may have poor properties that are worse than desired ones. In particular, when supplying the physical foaming agent, which is made of the super critical fluid or the like, into the cylinder for plasticizing, there is the following problem.

Namely, in case of using the super critical fluid as the foaming agent, the super critical fluid is supplied into the molten resin in a pressurized state to prevent foaming, the pressure is maintained in the process of injecting the molten resin into the mold, and the pressure is finally reduced (released) in the cavity. Accordingly, the pressure applied to the molten resin in the cylinder is maintained to a high pressure before the injection process. In the process of the spiral-shaped screw transmitting the molten resin to a downstream direction (injection end), the above-described pressure also acts on the upstream side of the supply portion of the super critical fluid, and therefore a force operative to push back the molten resin, resin pellets and reinforcement fiber would be generated. Accordingly, there may be a necessity that the screw has a certain mechanism to prevent the counterflow of the molten resin containing the super critical fluid at a portion that is located upstream of the supply portion of the super critical fluid.

This kind of anti counterflow mechanism generally comprises a labyrinth structure of resin flow path so as to prevent the upstream-direction pushing back. Herein, in case of applying the above-described structure of anti counterflow mechanism to the screw, there is a problem that the reinforcement fiber mixed with the resin would be cut into pieces and broken when getting though this mechanism (labyrinth structure). Thus, the properties of the fiber filler reinforced foam resin molded article that is made by the molding method with the super critical fluid would deteriorate improperly.

The above-described problem may not be recognized in the above publication because the resin containing the reinforcement fiber (short glass fiber) is supplied to a portion upstream of the ring-shaped check valve in its embodiment. The ring-shaped check valve changes its position in such a manner that its ring member contacts either one of a seal face and a block face of the screw, thereby allowing the resin to flow in the downstream direction and restricting the pressure from the super critical fluid supplied downstream. Accordingly, although this ring-shaped check valve may have the same problem of breakage of the reinforcement fiber, no countermeasure seems to be applied.

The present invention has been devised in view of the above-described problem, and an object of the present invention is to provide a molding method and apparatus of a fiber filler reinforced resin molded article that can improve properties, such as strength, rigidity and the like, particularly by preventing the reinforcement fiber from being broken at the anti counterflow portion of the screw.

This object is solved by the molding method of a fiber filler reinforced resin molded article according to the present invention of claim 1 and the molding apparatus of a fiber filler reinforced resin molded article according to the present invention of claim 8. Preferred embodiments of the present invention are subject of the dependent claims.

According to the present invention, there is provided a molding method of a fiber filler reinforced resin molded article, according to claim 1.

Also, according to the present invention, there is provided a molding apparatus of a fiber filler reinforced resin molded article, according to claim 8.

According to the above molding method or apparatus, since the location of mixing the reinforcement fiber is substantially downstream of the anti counterflow portion, the reinforcement fiber can be prevented from being broken at the anti counterflow portion. Also, the location of supplying the (preferably physical or chemical) foaming agent is substantially downstream of the anti counterflow portion. Herein, the reinforcement-fiber mixing portion and the foaming-agent supply portion may be located at the same location in the flow direction, or either one may be located upstream of the other. In any case, as long as both the portions are located upstream of the anti counterflow portion, the breakage of the reinforcement fiber can be prevented, without making the molding method or apparatus complex. Thus, the fiber filler reinforced resin molded article with improved properties, such as strength, rigidity and the like, can be provided.

According to an embodiment of the molding method or apparatus of the present invention, the (preferably physical or chemical) foaming agent is a super critical fluid.

Thereby, since the super critical fluid can be mixed and dispersed uniformly as the (preferably physical or chemical) foaming agent, the molded article having a properly fine foam cell can be provided.

According to another embodiment of the molding method or apparatus of the present invention, the reinforcement fiber is mixed with the resin in the cylinder at a portion that is located substantially downstream of the above supply portion of the (preferably physical or chemical) foaming agent.

Thereby, since the reinforcement fiber is mixed substantially downstream of the supply portion of the (preferably physical or chemical) foaming agent, the reinforcement fiber is mixed with the resin that has reduced its viscosity with the (preferably physical or chemical) foaming agent, so that the mixing and dispersion of the reinforcement fiber can be improved.

According to further another embodiment of the molding method or apparatus of the present invention, the reinforcement fiber is provided independently so as to be mixed with the resin.

Thereby, since the reinforcement fiber is provided independently from the reinforcement-fiber mixing portion, a seal structure with proper airtightness can be applied at the reinforcement-fiber mixing portion. Accordingly, the (preferably physical or chemical) foaming agent and the plasticized molten resin can be surely prevented from leaking out from the reinforcement-fiber mixing portion.

According to further another embodiment of the molding method or apparatus of the present invention, the reinforcement fiber is provided in a form of a continuous fiber to the cylinder, and the provided continuous fiber is cut into pieces by the screw, whereby the reinforcement fiber is mixed with the resin in the cylinder.

Thereby, since the reinforcement fiber is provided in the form of the continuous fiber, a proper fluid- or airtightness at the reinforcement-fiber mixing portion can be improved properly with a simple structure, and the leakage of the (preferably physical or chemical) foaming agent and plasticized molten resin from the reinforcement-fiber mixing portion can be surely prevented.

According to further another embodiment of the molding method of the present invention, mixing and/or dispersion of the reinforcement fiber in the resin is promoted in a resin flow path from the supply portion of the (preferably physical or chemical) foaming agent to the cavity of the mold. And, according to further another embodiment of the molding apparatus of the present invention, there is provided a mixing-dispersion promoting device to promote mixing and dispersion of the reinforcement fiber in the resin in a resin flow path from the supply portion of the (preferably physical or chemical) foaming agent to the cavity of the mold.

Thereby, even if the mixing and dispersion of the reinforcement fiber in the resin is insufficient, the promotion of mixing and dispersion of the reinforcement fiber in the path from the mixing portion of the reinforcement fiber to the cavity of the mold can be attained by the mixing-dispersion promoting device. Thus, the reinforcement fiber can be dispersed more uniformly in the plasticized molten resin, and the fiber filler reinforced resin molded article with excellent properties can be provided.

According to further another embodiment of the molding method or apparatus of the present invention, the resin with the (preferably physical or chemical) foaming agent supplied thereto and the reinforcement fiber mixed therewith is collected temporarily, transmitted to an injection unit, metered for molding, and then supplied to the cavity of the mold via the injection unit.

Thereby, the molten resin with the (preferably physical or chemical) foaming agent and reinforcement fiber, which is collected temporarily in the collection portion, is transmitted to the injection unit, and after metering of the resin for the necessary amount for molding, the resin is supplied into the cavity of the mold via the injection unit. Thus, since this supply (confluence) promotes the mixing and dispersion of the reinforcement fiber in the molten resin, the reinforcement fiber can be dispersed uniformly, and the fiber filler reinforced resin molded article with more excellent properties can be provided.

According to further another embodiment of the molding apparatus of the present invention, there is provided a seal device to seal an inside from an outside of the cylinder at the reinforcement-fiber mixing portion.

Thereby, since the reinforcement-fiber mixing portion is sealed by the seal device, the leakage of the (preferably physical or chemical) foaming agent and plasticized molten resin from the reinforcement-fiber mixing portion can be surely prevented.

According to further another embodiment of the molding apparatus of the present invention, there is provided a flow-amount detecting device that is provided in a leakage path of the (preferably physical or chemical) foaming agent leaking from the reinforcement-fiber mixing portion and detects an amount of leakage of the (preferably physical or chemical) foaming agent, and the (preferably physical or chemical) foaming agent is configured to be supplemented from the foaming-agent supply portion substantially according to the leakage amount thereof detected by the flow-amount detecting device.

Thereby, the amount of leakage of the (preferably physical or chemical) foaming agent is detected by the flow-amount detecting device provided in the leakage path of the (preferably physical or chemical) foaming agent leaking from the reinforcement-fiber mixing portion, and the amount of the (preferably physical or chemical) foaming agent corresponding to the amount that has leaked is supplemented from the foaming-agent supply portion. Thus, the necessary amount of the (preferably physical or chemical) foaming agent in the resin composite can be maintained, and thereby the properties of the resin molded article having a desirable foaming ratio can be improved.

Other features, aspects, and advantages of the present invention will become apparent from the following description which refers to the accompanying drawings.

FIG. **1A** is a side view showing an entire structure of a fiber filler reinforced resin injection molding apparatus according to a first embodiment of the present invention, FIG. **1B** is a sectional view showing a cylinder inside of a plasticizing pushing portion, and FIG. **1C** is a sectional view showing a structure of a major portion of the cylinder inside of the plasticizing pushing portion.

FIG. **2** is a partially sectional view showing a GF supply unit with a seal structure that prevents a leakage of a foaming agent at the GF supply portion in the first embodiment.

FIG. **3** is a side view showing an entire structure of a fiber filler reinforced resin injection molding apparatus according to a second embodiment.

FIG. **4** is an explanatory diagram showing a schematic structure of a device to compensate a leakage of a physical foaming agent at a GF supply portion of a filler reinforced resin injection molding apparatus according to a third embodiment.

FIG. **5A** a view showing an attachment state of a mixing nozzle, and FIG. **5B** is a sectional view of a major portion of the mixing nozzle.

FIG. **6A** is a sectional view showing a cylinder inside of a metering injecting portion with a supersonic oscillator (or an electromagnetic-wave oscillator) of a vibration adding device, and FIG. **6B** is a sectional view showing an attachment state of an agitating plate in the cylinder inside of the metering injecting portion.

FIG. **7** is a sectional view of a mold in which the mixing nozzle and a similar agitating device are provided at a hot runner portion.

FIG. **8** is a side view of a foaming-agent supply portion in which a porous member is disposed at an inside wall of a supply nozzle.

FIG. **9** is a side view showing a seal structure with a resilient member as a modified embodiment.

Hereinafter, a molding method and apparatus of a fiber filler reinforced resin molded article of the present invention will be described specifically. It should be understood that even though embodiments are separately described, single features thereof may be combined to additional embodiments.

### EMBODIMENT 1

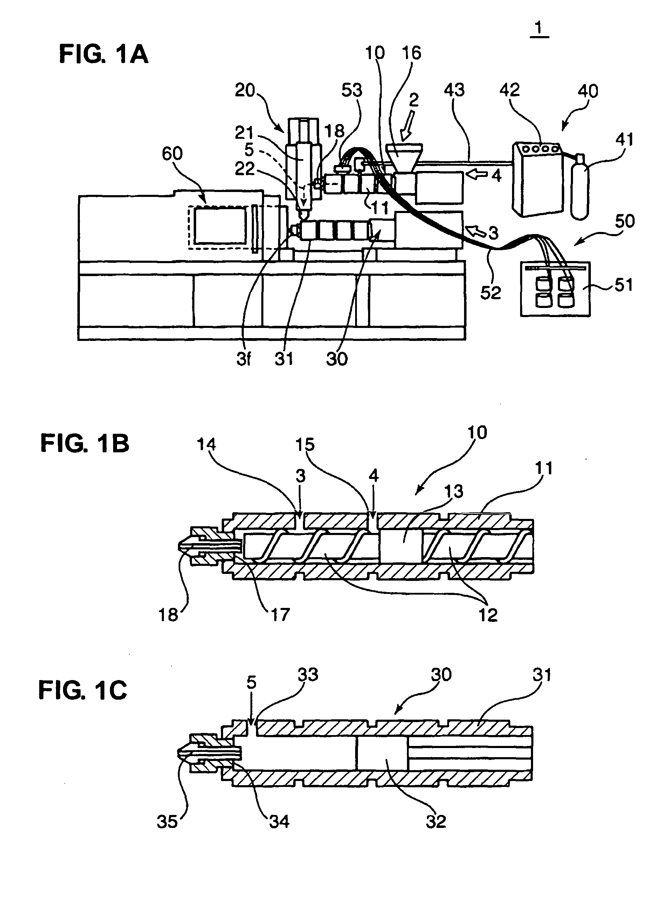

An entire structure of a fiber filler reinforced resin injection molding apparatus according to a first preferred embodiment of the present invention is shown in FIG. **1****.** The fiber filler reinforced resin injection molding apparatus **1** comprises a plasticizing or plasticating pushing portion **10,** a resin collection portion **20,** a metering injecting portion **30,** a super critical fluid (SCF) supply unit **40,** a glass fiber (GF) supply unit **50** (as a preferred reinforcing fiber supply unit), and a mold **60.**

The plasticizing pushing portion **10** has a screw or worm screw **12** in a material supply cylinder **11,** and agitates, kneads and/or conveys a resin **2** which is provided from a hopper **16** with a rotation of the screw **12** for plasticizing (melting). And, at least one reinforcement fiber **3,** which is supplied from the GF supply unit **50** at a reinforcement-fiber mixing portion **14,** and a physical or chemical foaming agent **4,** which is supplied from the SCF supply unit **40** at a foaming-agent supply portion **15,** are mixed with the plasticized molten resin or while the resin is being plasticized. Then, the plasticized molten resin containing the reinforcement fiber **3** (and the physical or chemical foaming agent **4**) (hereinafter, referred to as resin composite **5**) is pushed out (transmitted or conveyed) to a resin collection portion **20,** where the resin is collected temporarily in a collector **21.** In the present embodiment, the plasticizing pushing portion **10** preferably is not constituted as an injection unit, and has a capability to push out and transmit the plasticized resin composite **5** to the resin collection portion **30.** An on-off valve **18** is provided at a pushing end (outlet) **17** of the plasticizing pushing portion **10.**

The screw **12** provided inside the cylinder **11** preferably includes an anti counterflow portion **13.** The anti counterflow portion **13** may be configured, for example, to have a labyrinthine structure as described above, or a ring-member position changing mechanism. Positional relationships among the counterflow portion **13,** the reinforcement-fiber mixing portion **14,** and the foaming-agent supply portion **15** will be described specifically below.

The resin collection portion **20** collects the resin composite **5** transmitted from the plasticizing pushing portion **10** in the collector **21** temporarily. The resin composite **5** in the collector **21** is controlled so as to be transmitted to a junction portion **33** of the metering injecting portion **30** by a valve **22** that is provided at a downward or downstream end (outlet) of the collector **21.**

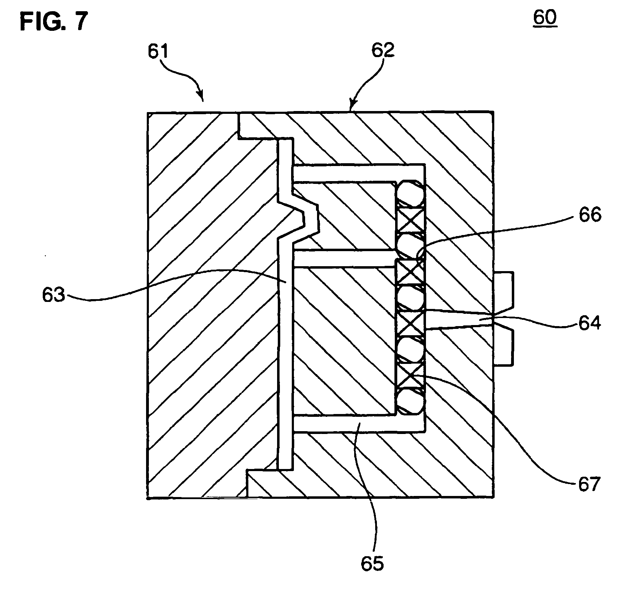

The metering injecting portion **30** preferably is configured to be an injection unit in which an injection piston **32** is provided in the cylinder **31,** and guides the resin composite **5** in the collector **21** to the junction portion **33** so as to make the reinforcement fiber **3** and the physical foaming agent **4** be mixed with the resin composite **5.** Further, after metering of the resin composite for a necessary amount for molding, the resin composite **5** is configured to be injected into a cavity **63** (see FIG. **7****)** of the mold **60** with an opening/closing operation of a valve **35** that is provided at an injecting end **34** (outlet) and an reciprocating movement of the injection piston **32.**

As described above, at the lower ends (outlets) of the plasticizing pushing portion **10,** resin collection portion **20,** and/or metering injecting portion **30** are provided the valves **18, 22** and/or **35** that are opened or closed with the on-off operation. These valves **18, 22** and/or **35** allow the resin composite **5** to flow out when opening, and when closing, they stop the flow and preferably prevent counterflow of the resin composite **5** as well, ensuring a proper seal function. Herein, since these valves **18, 22** and/or **35** are just operated to open and close, the reinforcement fiber **3** may not be broken or hurt by operations of the valves **18, 22** and/or **35.**

The SCF supply unit **40** guides the (physical or chemical) foaming agent **4** into the fiber filler reinforced resin injection molding apparatus **1,** in which the foaming agent **4** is supplied into the cylinder **11** (the resin **2**) at the foaming-agent supply portion **15** provided at the plasticizing pushing portion **10.** The SCF supply unit **40** comprises a gas reservoir **41** with a raw gas stored therein, and a pressure-increase control portion **42** to increase a pressure of the raw gas from the gas reservoir **41** to a specified (predetermined or predeterminable) pressure and control a supply amount of the pressure-increased physical foaming agent into the cylinder **11.**

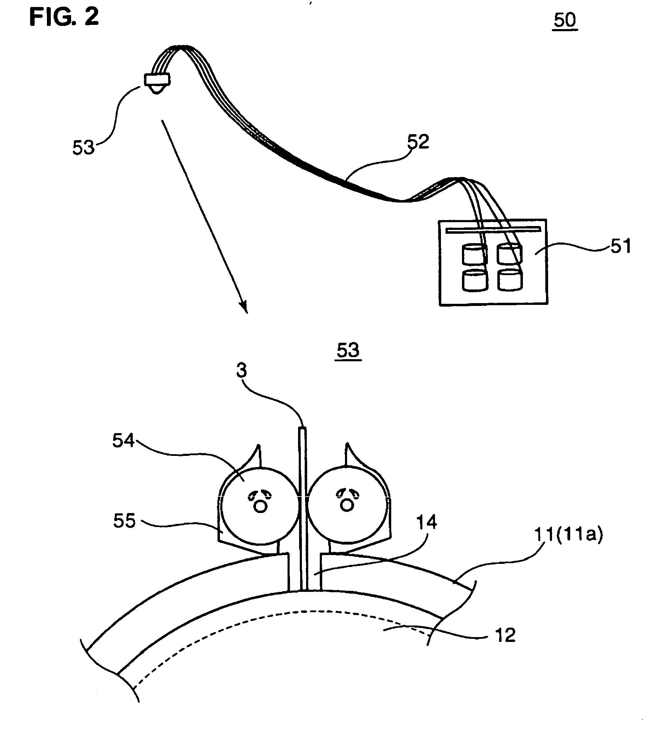

The GF supply unit **50** (as the preferred reinforcement fiber supply unit) supplies the reinforcement fiber **3** (preferably continuous glass fiber **3** in the present embodiment) to the reinforcement-fiber mixing portion **14** of the plasticizing pushing portion **10.** The GF supply unit **50** comprises, as shown in FIG. **2****,** a GF storage portion **51** that stores the reinforcement fiber (preferably the substantially round glass fiber **3)** in a coil shape therein with a proper seal, a GF supply portion **53** that is connected to the reinforcement-fiber mixing portion **15,** a flexible supply pipe **52** that interconnects the GF storage portion **51** and the GF supply portion **53** and supplies the reinforcement fiber (preferably glass fiber) **3** therein. The GF supply portion **53** of the present embodiment comprises a fiber supply roller **54** to supply the reinforcement fiber (preferably glass fiber) **3** with its rotation, and a seal member **55** that can provide proper sealing between side walls of the cylinder **11** (cylinder barrel **11**a), in which the roller **54** is held by the seal member **55** so as to be pushed substantially against a periphery of an opening of the reinforcement-fiber mixing portion **14.** Accordingly, the portions **51, 52** and **53** are connected with proper sealing (air- or fluid-tightness), and the inside circumference is properly shut off from an outside atmosphere with the sealing. Thereby, the (physical or chemical) foaming agent **4** and the resin composite **5** containing the foaming agent **4,** which have been supplied into the cylinder **11,** are prevented from leaking out from the reinforcement-fiber mixing portion **14** (GF supply portion **53,** GF supply unit **50).**

Then, preferably the continuous glass fiber **3** is supplied into the cylinder **11** of the plasticizing pushing portion **10** by the roller **54** with its rotation, where the fiber **3** is cut into pieces preferably by a shearing force of the screw **12** rotating in the cylinder **11.** A length of the fiber pieces preferably can be adjusted by the rotational speed of the screw **12,** the relative friction force between the fiber **3** and the roller **54** and/or the supply speed of the fiber **3** by the roller **54.**

According to the present embodiment, the mixing portion **14** of the reinforcement fiber **3** preferably is located downstream of the anti counterflow portion **13** of the screw **12.** Also, the supply portion **15** of the (physical or chemical) foaming agent **4** preferably is (likewise) located downstream of the anti counterflow portion **13** of the screw **12** and/or upstream of the mixing portion **14** of the reinforcement fiber **3.** Thus, by the location of the mixing portion **14** of the reinforcement fiber **3** downstream of the anti counterflow portion **13,** the reinforcement fiber **3** can be advantageously prevented from being broken at the anti counterflow portion **13.** And, by the location of the supply portion **15** of the (physical or chemical) foaming agent **4** upstream the mixing portion **14** of the reinforcement fiber **3,** the reinforcement fiber **3** is mixed with resin **2** that has reduced its viscosity with the (physical or chemical) foaming agent **4,** so that the mixing and dispersion of the reinforcement fiber **3** can be improved. Also, the mixed fiber **3** is transmitted downward by the (physical or chemical) foaming agent **4,** so it may not go upstream.

Further, according to the present embodiment, the reinforcement fiber **3** is mixed with the resin **2** preferably at the portion (mixing portion **14**) located downstream of the supply portion of the (physical or chemical) foaming agent **4** (supply portion **15**). Accordingly, the reinforcement fiber **3** is mixed with resin **2** that has reduced its viscosity with the (physical or chemical) foaming agent **4,** so that the mixing and dispersion of the reinforcement fiber **3** in the resin composite **5** can be improved.

In the present embodiment, a thermoplastic resin preferably is used as the following resin **2,** and the following thermoplastic resin may be applied; polyethylene-based resin, polypropylene-based resin, acrylonitrile-butadiene-styrene copolymer (ABS resin), polystyrene-based resin, polycarbonate-based resin, polyethylene terephthalate, polybutylene terephthalate, acrylonitrile-styrene copolymer (AS resin), sybdiotactic polystyrene, polymethyl methacrylate, polyphenylene sulfide, polyether sulfone, polyarylate, polyamide, polyimide, liquid crystal resin, polyphenylene oxide, polyacetal, polyethylene naphthalate, and so on. Especially, the polypropylene-based resin, polystyrene-based resin, polycarbonate-based resin, sybdiotactic polystyrene, polyphenylene sulfide are preferable, and polypropylene-based resin are more preferable. Also, polymer blend is applicable as the thermoplastic resin.

Also, as the reinforcement fiber **3,** glass fiber, carbon fiber, inorganic whisker, potassium titanate whisker, and so on preferably may be applied.

The content of the thermoplastic resin **2** with respect to the thermoplastic resin composite **5** is preferably about 20 - about 95 wt%, more preferably about 60 - about 90 wt%. There is a concern of a poor flowing function or a weak mechanical rigidity if the content of the thermoplastic resin **2** is too small. Also, the content of the reinforcement fiber **3** with respect to the thermoplastic resin composite **5** is preferably about 0 - about 50 wt%, more preferably about 10 - about 40 wt%.

Further, to the above-described thermoplastic resin composite **5** may be added an additive or changing agent, such as powder fillers, plasticizing agent, stabilizing agent, anti oxidant, ultraviolet-ray absorbent, anti-charging agent, flame retardant, or flame-resistant agent.

The physical foaming agent **4** (as the preferred foaming agent) in the present embodiment includes any foaming agent with a pressure lower than the super critical pressure, other than the super critical fluid in the super critical state (Super Critical Fluid: SCF), just excluding a chemical foaming agent that foams with a heat caused by a chemical reaction. A super critical fluid is a fluid that is in a state where the temperature and pressure of the fluid exceeds respectively the critical temperature and/or pressure that allow the at least partial coexistence of gas and liquid.

Although any type of (physical or chemical) foaming agent **4** may be applied in the present embodiment as long as it can be molten in the thermoplastic resin composite **5** and is an inert gas regardless of being in the super critical state, the super critical fluid of carbon dioxide, nitrogen or composite gas of these is preferable from viewpoints of safety, costs and the like. And, when the physical foaming agent **4** of these gas is applied, the foaming agent **4** can be mixed and dispersed well, thereby providing the fiber filler reinforced resin molded article (product) having a properly fine foam cell and a further improved properties.

The application of the super critical fluid of carbon dioxide may be more preferable because of little damage against the global environment. The critical temperature of the carbon dioxide is 31. 3 °C and the critical pressure thereof is 7.4 MPa, and the critical temperature of the nitrogen is - 147 °C and the critical pressure thereof is 3.4 MPa. Accordingly, the super critical state of these can be easily maintained by heating and pressuring (herein, heating may not be necessary for the nitrogen). Also, since the super critical fluid of the carbon dioxide or nitrogen functions as a plasticizing agent, the flowing of the resin can be improved, thereby providing the injection molding of the resin composite **5** containing the reinforcement fiber 3 with better flowing properties.

It is preferable from viewpoints of ensuring a sufficient supply speed that the pressure at a time the (physical or chemical) foaming agent **4** is supplied to the thermoplastic resin composite **5** be set to about 15 MPa or more, further preferably about 20 MPa or more. The supply amount of the physical foaming agent **4** depends on the kind thereof, but it is preferable that the supply amount with respect to about 100 wt% of the thermoplastic resin composite **5** be set to about 0.1 - about 20 wt%, further preferably about 0.5 - about 10 wt%. Accordingly, the properly fine foam cell can be provided while advantageously avoiding that the foam cell may become too large and an appearance of the molded article may deteriorate.

In the present embodiment, the mold **60** comprises a stationary mold **61** and a movable mold **62,** which preferably at least partly are made from metal or steel material such as carbon steel, aluminum alloy, or copper alloy. The cavity **63** is formed by these molds **61, 62** coupled to each other, and a hot runner portion **66** is provided in a flow path of the molten resin composite **5** from an injection supply hole **64** (nozzle) to a gate **65.**

As described above, according to the present embodiment, since the location of mixing the reinforcement fiber **3** (reinforcement-fiber mixing portion **14**) is downstream of the anti counterflow portion **13,** the reinforcement fiber **3** can be prevented from being broken at the anti counterflow portion **13.** Also, the location of supplying the physical foaming agent **4** (foaming-agent supply portion **15**) is downstream of the anti counterflow portion **13.** Herein, the reinforcement-fiber mixing portion **14** and the foaming-agent supply portion **15** may be located at the substantially same location in the flow direction, or either one may be located upstream of the other. In any case, as long as both the portions **14, 15** are located upstream of the anti counterflow portion **13,** the breakage of the reinforcement fiber **3** can be prevented, without making the molding method or apparatus complex. Thus, the fiber filler reinforced resin molded article with improved properties, such as strength, rigidity and the like, can be provided.

According to the present embodiment, the reinforcement-fiber mixing portion **14** is located downstream of the foaming-agent supply portion **15.** Thereby, since the reinforcement fiber **3** is mixed with the resin **2** to which the foaming agent **4** is supplied, the reinforcement fiber **3** is mixed with resin **2** that has reduced its viscosity with the foaming agent **4.** Thus, the mixing and dispersion of the reinforcement fiber **3** in the resin composite **5** can be improved.

Further, since the reinforcement fiber **3** is provided independently from the reinforcement-fiber mixing portion **14,** the seal structure with proper fluid- or air-tightness can be applied at the reinforcement-fiber mixing portion **14.** Thereby, the foaming agent **4** and the resin composite **5** can be surely prevented from leaking out from the reinforcement-fiber mixing portion **14.** Also, since the reinforcement fiber **3** preferably is provided in the form of the continuous fiber, the proper fluid- or air-tightness can be improved properly with a simple structure.

The resin composite **5** collected temporarily in the resin collection portion **20** is transmitted to the metering injecting portion **30,** and after metering of the resin composite **5** for the necessary amount for molding, the resin composite **5** is supplied into the cavity **63** of the mold **60** via the metering injecting portion **30.** Since this supply (confluence) promotes the mixing and dispersion of the reinforcement fiber **3** in the resin composite **5,** the reinforcement fiber **3** can be dispersed uniformly. Thus, the fiber filler reinforced resin molded article with more excellent properties can be provided.

Accordingly, in a molding method of a fiber filler reinforced resin molded article, in which a reinforcement fiber **3** and a resin **2** are plasticized and kneaded in a material supply cylinder **11** including a screw **12** with an anti counterflow portion **13,** and the resin **5** with the reinforcement fiber **3** at least partly mixed therewith is injected into a cavity of a mold **60,** the reinforcement fiber **3** is mixed with the resin in the cylinder **11** at a portion downstream of the anti counterflow portion **13** of the screw **12,** and a (physical or chemical) foaming agent **4** is supplied into the cylinder **11** at a portion downstream of the anti counterflow portion **13.** Accordingly, there can be provided a molding method or apparatus of a fiber filler reinforced resin molded article that can improve properties by preventing the reinforcement fiber from being broken.

### EMBODIMENT 2

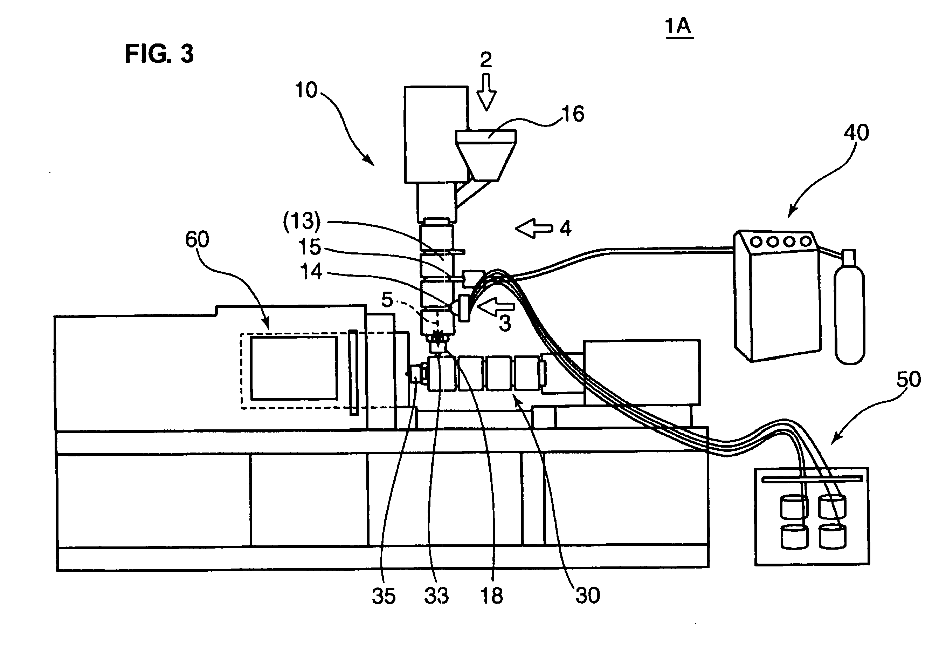

An entire structure of a fiber filler reinforced resin injection molding apparatus according to a second preferred embodiment of the present invention is shown in FIG. **3****.** The fiber filler reinforced resin injection molding apparatus **1A** is different from the apparatus **1** of the first embodiment in having no resin collection portion **20.** The apparatus **1A** has the similar or substantially same components as the apparatus **1** except the following portion. The similar or substantially same components of the apparatus **1A** are denoted by the same reference characters as those of the apparatus **1,** whose descriptions will be omitted.

In the present embodiment, the resin composite **5** plasticized at the plasticizing pushing portion **10** is supplied directly to the junction portion **33** of the metering injecting portion **30.** At the junction portion **33,** the mixing and dispersion of the reinforcement fiber **3** and the (physical or chemical) foaming agent **4** in the resin composite **5** is attained, and after metering of the resin composite **5** for the necessary amount for molding, the resin composite **5** is injected into the cavity **63** of the mold **60.**

In the second embodiment, like the first embodiment, the foaming-agent supply portion **15** preferably is located downstream of the anti counterflow portion **13,** and the reinforcement-fiber mixing portion **14** is located downstream of the foaming-agent supply portion **15.** Accordingly, the reinforcement fiber **3** can be prevented from being broken at the anti counterflow portion **13,** and the reinforcement fiber **3** can be mixed and/or dispersed properly in the resin composite **5.** Thus, the fiber filler reinforced resin molded article with the improved properties, such as strength, rigidity and the like, can be provided.

### EMBODIMENT 3

In the above-described first embodiment, the seal member **55** is provided at the GF supply portion **53** to prevent the (physical or chemical) foaming agent **4** and the resin composite **5** from leaking out of the reinforcement-fiber mixing portion **14** (GF supply unit **50).** There may be preferably provided a compensating means for compensating the physical foaming agent **4** according to the amount of leakage of the agent **4** instead.

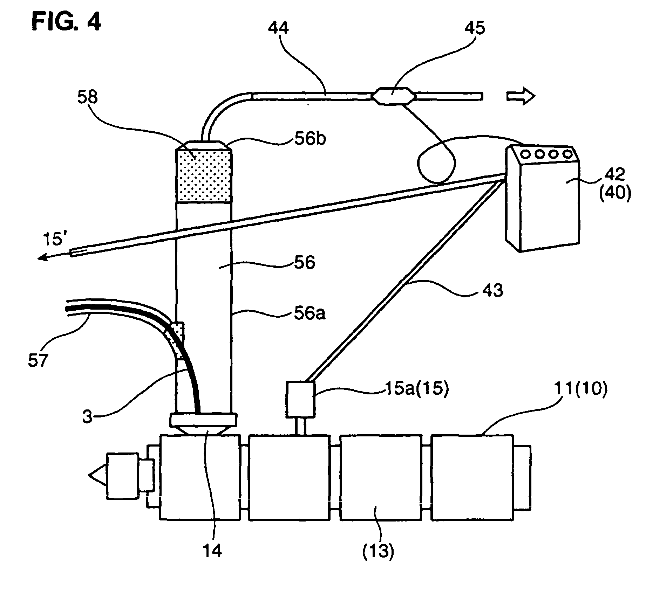

A schematic structure of a plasticizing pushing portion equipped with a leakage compensating device of the (physical or chemical) foaming agent is shown in FIG. **4**. This plasticizing pushing portion **10,** which may be applied to the injection molding apparatus **1, 1A** of the first and/or second embodiments, includes the foaming-agent supply potion **15** preferably located downstream of the anti counterflow portion **13** and/or the reinforcement-fiber mixing portion **14** preferably located downstream of the foaming-agent supply potion **15.** To the foaming-agent supply potion **15** is coupled a supply pipe **43** to supply the (physical or chemical) foaming agent **5** from the SCF supply unit **40.** To the reinforcement-fiber mixing portion **14** is coupled a buffer tank **56**, and a branch pipe **57** (provided near the supply pipe **52**) to supply the reinforcement fiber **3** from the GF supply unit **50** is attached to a cylindrical side wall face **56a** of the buffer tank **56**. To an upper end wall face **56b** of the buffer tank **56** is connected a SCF guide pipe **44** to guide the foaming agent **4** that has leaked to an outside environment or the SCF supply unit **40**. And, a flow meter **45** (flow-amount detecting device) is disposed in the SCF guide pipe **44**. The flow meter **45** preferably detects the leakage amount of the foaming agent **4**. Information of this leakage amount is fed back to the SCF supply unit **40**, which operates to supply the substantially same amount of the foaming agent **4** as the leakage amount into the cylinder **11** through the foaming-agent supply portion **15**. Instead, a second foaming-agent supply portion **15'** (not illustrated) may be provided preferably downstream of the reinforcement-fiber mixing portion **14**, and the substantially same leakage amount of the physical foaming agent **4** may be supplied again from the SCF supply unit **40** into the cylinder **11** via this second foaming-agent supply portion **15'**.

Thus, the amount of the (physical or chemical) foaming agent **4** that substantially corresponds to the amount that has leaked can be supplemented from the foaming-agent supply portion **15, 15'**. The necessary amount of the foaming agent **4** in the resin composite **5** can be maintained, and thereby the properties of the resin molded article having a desirable foaming ratio can be improved. Herein, the above-described necessary amount and the desirable foaming ratio should be properly decided in designing the resin molded article. Herein, a porous member **58** preferably is provided at an inside face of the upper end wall face **56b** and an inside face of the attaching portion of the branch pipe **57** of the buffer tank **56**. This porous member **58** shuts the flow of the resin composite **5** with the foaming agent **4**, thereby preventing the resin composite **5** from leaking further.

According to the third embodiment, the leakage amount of the foaming agent **4** that has leaked from the reinforcement-fiber mixing portion **14** is detected by the flow-amount detecting device (flow meter **45**) in the path (SCF guide pipe **44**), and the foaming agent **4** can be supplemented by the amount corresponding to the leakage amount from the foaming-agent supply portion(s) **15, 15'**. Thereby, the necessary amount of the foaming agent **4** in the resin composite **5** can be substantially maintained, and the properties of the resin molded article having the desirable foaming ratio can be improved.

The above-described embodiments are just examples, and the present invention should not be limited to these. Any modifications can be applied within the scope of a sprit of the present invention.

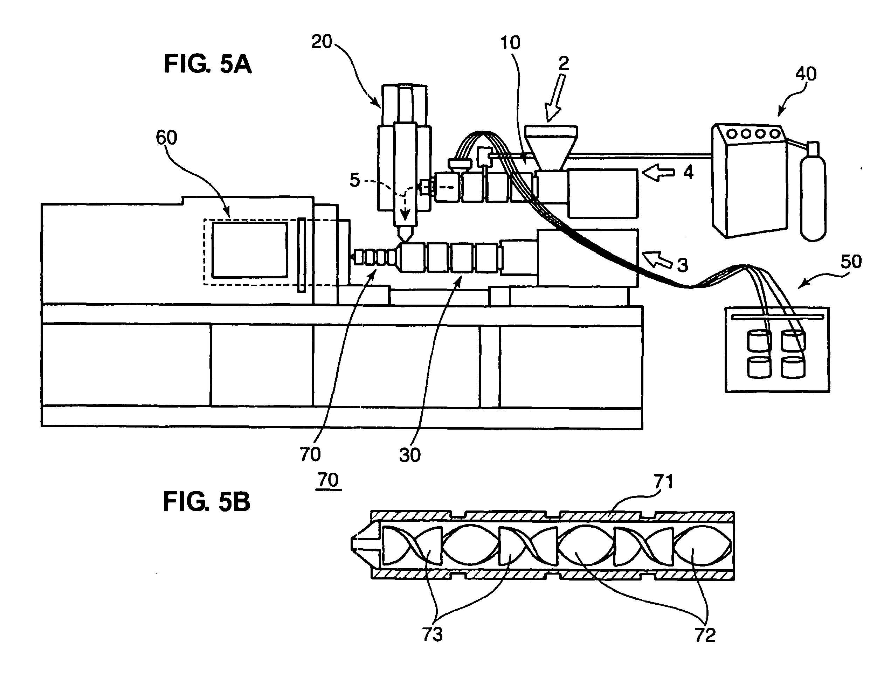

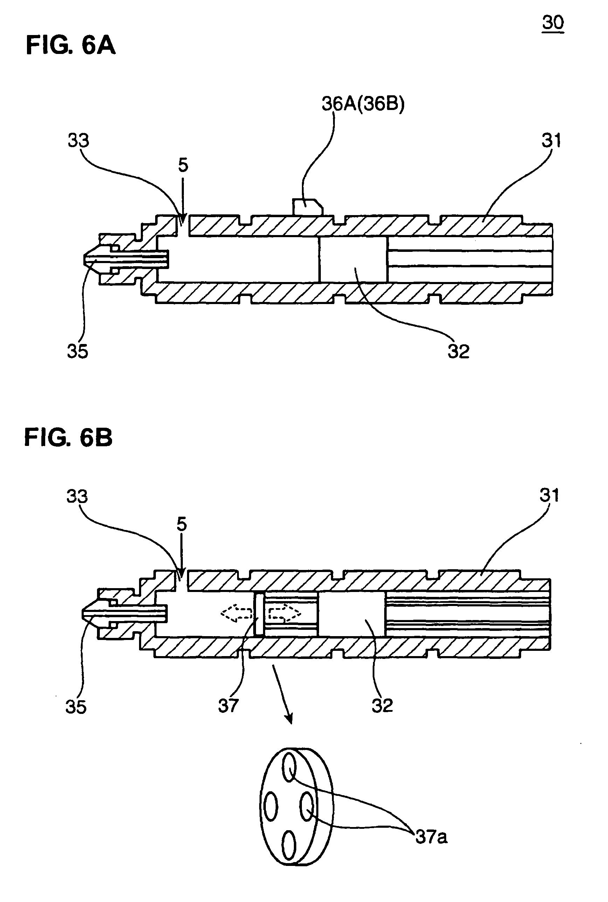

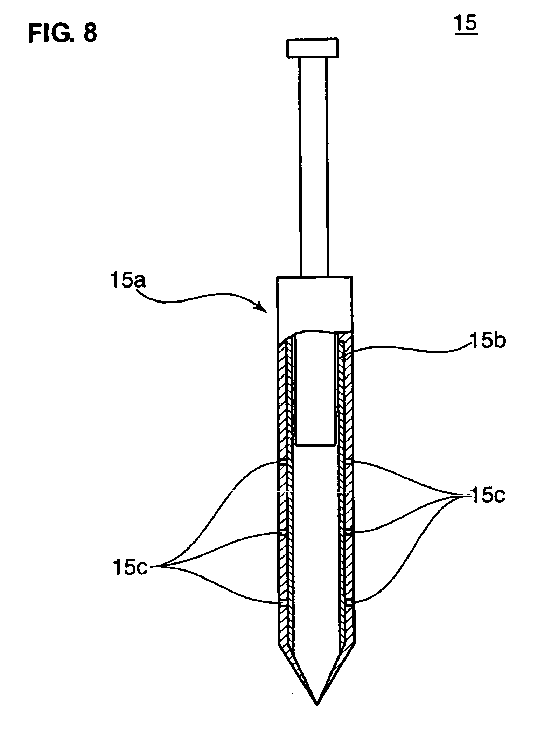

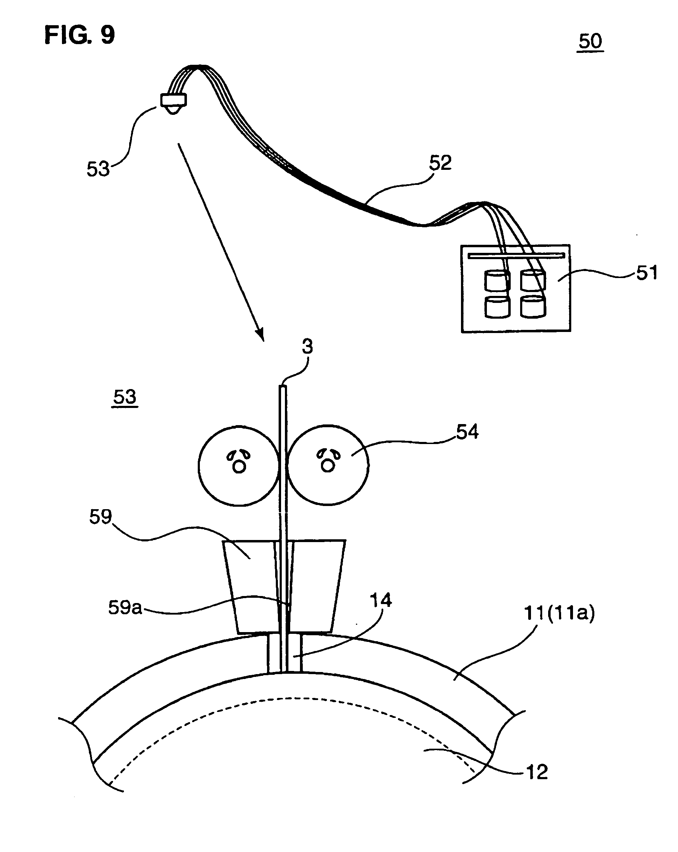

Hereinafter, some modifications of the above-described embodiments will be described.
1) Although the supply portion **15** of the (physical or chemical) foaming agent **4** and the mixing portion **14** of the reinforcement fiber **3** preferably are located downstream of the anti counterflow portion **13** of the screw **12** in this order in the first, second and third embodiments, the supply portion **14** of the reinforcement fiber **3** may be located upstream of the supply portion **15** of the physical foaming agent 4, or these portions **14, 15** are located at the substantially same location in the flow direction as long as these portions **14, 15** are located downstream of the anti counterflow portion **13**.
2) Although the reinforcement fiber **3** in the form of the continuous fiber is supplied from the GF supply unit **50** and independently mixed with the resin in the cylinder **11** at the mixing portion **14** in the first, second and third embodiments, the resin **2** containing the reinforcement fiber **3** with a previously-cut specified (predetermined or predeterminable) length(s) may be supplied from a reinforcement-fiber/resin supply portion that is located downstream of the anti counterflow portion **13**. Herein, since there is a concern of leakage of the (physical or chemical) foaming agent **4** and resin composite **5** due to the pressure increasing according to the supply of the physical foaming agent **4** at the reinforcement-fiber/resin supply portion, it may be necessary to provide the seal structure described above. Herein, in the case where the fiber in the form of the continuous fiber is supplied like the above embodiment, the seal structure at the mixing portion **14** of the reinforcement fiber **3** can be formed easily. Accordingly, the above-described structure may be preferable.
3) In the first, second and third embodiments, the reinforcement fiber **3** supplied from the mixing portion **14** of the plasticizing pushing portion **10** is mixed with the resin composite **5** along with the physical foaming agent **4** in the area from the portion **14** to the valve **18** at the pushing end (outlet) **17**, and the plasticized resin composite **5** is received from the resin collection portion **20** or the plasticizing pushing portion **10** at around the injecting end **34** (outlet) of the metering injecting portion **30**, and the mixing and dispersion of the reinforcement fiber **3** and the foaming agent **4** in the resin composite **5** is attained using mixing/dispersion effects preferably by flowing. Herein, however, there is a concern of an insufficiency in this mixing and/or dispersion. Namely, a distance between the reinforcement-fiber mixing portion **14** and the valve **18** at the pushing end (outlet) **17** is relatively short because of the location of the mixing portion **14** downstream of the anti counterflow portion **13**, and thereby the mixing and dispersion of the reinforcement fiber **3** and the foaming agent **4** with the resin composite **5** might become insufficient.
   Accordingly, it is preferable, as shown in FIG. **5A**, that the resin composite **5** be injected into the mold **60** from the metering injecting portion **30** via a mixing nozzle **70** in the above-described embodiments. This mixing nozzle **70** is configured such that elements **A72** that are made of flat plates respectively by twisting (particularly clockwise) by about **180** degrees spirally and other elements **B73** that are made of substantially flat plates respectively by twisting (particularly counterclockwise) by about **180** degrees spirally are disposed one after the other in an axis direction. Thus, the resin composite **5** is twisted (clockwise and counterclockwise) repeatedly when proceeding in the mixing nozzle **70**. Thereby, the mixing and dispersion of the reinforcement fiber **3** and the (physical or chemical) foaming agent **4** can be promoted.
   Accordingly, even if the mixing and dispersion of the reinforcement fiber **3** in the resin composite **5** is insufficient (or there is such a concern), the promotion of mixing and dispersion of the reinforcement fiber **3** in the path from the mixing location (mixing portion **14**) of the reinforcement fiber **3** to the cavity **63** of the mold **60** can be attained by the mixing-dispersion promoting device like the mixing nozzle **70**. Thus, the reinforcement fiber **3** can be dispersed more uniformly in the resin composite **5**, and the fiber filler reinforced resin molded article with excellent properties can be provided.
   Herein, the mixing-dispersion promoting device is not limited to the above-described mixing nozzle **70**. The internal structure of the mixing nozzle **70** is not limited to the above one, but any modifications may be applied as long as the resin composite **5** can be agitated well in the resin flowing path and thereby the mixing and dispersion of the reinforcement fiber **3** and (physical or chemical) foaming agent **4** can be promoted. As modifications of the mixing nozzle **70,** the following alternatives shown in 4) - 6) may be applied.
4) Although the mixing and dispersion of the reinforcement fiber **3** and the (physical or chemical) foaming agent **4** in the resin composite **5** is attained when these are received at the metering injecting portion **30** in the first, second and third embodiments, there is not provided any particular promoting mechanism to promote the mixing and dispersion. Herein, there may be provided a vibration adding device for promoting the mixing and dispersion of the reinforcement fiber **3** and physical foaming agent **4** by actively adding vibrations to the resin composite **5.**
   For example, a mechanical-vibration adding device with at least one supersonic oscillator **36A** (vibrator device) and/or at least one heating-vibration adding device with an electromagnetic-wave vibrator **36B** may be applied as the vibration adding device. In case of using a supersonic vibration, as shown in FIG. **6A****,** the supersonic oscillator **36A** is attached to the side wall of the cylinder **31** (cylinder barrel outer face) of the metering injecting portion **30.** The supersonic oscillator **36A** vibrates by receiving a supersonic voltage from a supersonic vibrator, not illustrated, so the vibration (agitating force) can be added to the resin composite 5 in the cylinder **31.** An attaching portion of the supersonic oscillator **36A** is not limited to the above portion. In case of using the electromagnetic-wave vibration adding device, an attachment of the electromagnetic-wave vibrator **36B** is the same as above.
   Thus, the vibration is added to the resin composite **5** with the device such as the supersonic oscillator **36A** and/or electromagnetic-wave vibrator **36B,** so the mixing and dispersion of the reinforcement fiber **3** and physical foaming agent **4** in the resin composite **5** can be promoted.
   A type of device that can add a flowing force to the resin and thereby agitate it may be applied as the vibration adding device as well. As shown in FIG. **6B****,** an agitating plate **37** having plural through holes **37a** preferably is disposed in a space that is located on a side of the junction portion **33** before the injection piston **32** in the cylinder **31** of the metering injecting portion **30.** This agitating plate **37** is operated so as to move back and force (reciprocate) in a state where the location of the injection piston **32** is fixed. Thereby, the resin composite **5** is made get through these holes **37a** according to the back-and-forth movement of the agitating plate **37** (generating a turbulence), so the mixing and dispersion of the reinforcement fiber **3** and foaming agent **4** in the resin composite **5** can be promoted. When the injection is conducted, both the injection piston **32** and the agitating plate **37** are moved forward to inject the resin composite **5** into the mold **60.**
   Herein, when the injection is conducted, the agitating plate **37** is moved forward along with the injection piston **32** in a state where it is fixed to the piston **32,** or previously moved forward before the piston **32** is moved forward, so that the agitating plate **37** can be prevented from interfering with the movement of the injection piston **32** at the injection process. The shape or the number of the through holes **37a** of the agitating plate **36** should not be limited to an illustrated circular shape or four. Also, something like the above-described elements **72, 73** (about 180-degree clockwise and counterclockwise twisted plates) applied to the mixing nozzle **70** may be provided at the holes **37a,** or the holes **37a** may be formed to be of a spiral shape like these elements **72, 73.** Thereby, the effect of the promotion of mixing and dispersion by the agitating plate **37** can be enhanced.
   Further, any type of agitating device other than the above-described plate **37,** which can add the flowing force to the resin composite **5** with a reciprocating drive or a rotating drive and thereby agitate it, may be applied. For example, a propeller type of member with agitating wings may be rotated, or a plate member with circular holes having agitating wings therein may be reciprocated.
5) Although there is not provided a particular mechanism to promote the mixing and/or dispersion of the reinforcement fiber **3** and (physical or chemical) foaming agent **4** at the mold **60** in the first, second and third embodiments, a mixing portion **67** that has a kneading and/or agitating function with the similar or substantially same structure as the above-described mixing nozzle **70** may be provided in the flow path (e.g., hot runner **66)** of the molten resin composite **5** in the mold **60** as shown in FIG. **7****.** Thereby, the mixing and dispersion of the reinforcement fiber **3** and physical foaming agent **4** can be promoted before the resin composite **5** flows into the cavity **63** of the mold **60.**
6) Although there is not provided a particular mechanism to promote the mixing and/or dispersion of the (physical or chemical) foaming agent **4** at the foaming-agent supply portion **15** of the plasticizing pushing portion **10** in the first, second and third embodiments, a porous structure **15b** (e.g., a metal porous member) preferably may be disposed at an inner wall face of the injection nozzle **15a** as shown in FIG. **8****.** Thereby, the (physical or chemical) foaming agent **4** supplied from supply holes **15c** is introduced into the resin composite **5** with an increased contacting face, so a prompt dispersion of the foaming agent **4** into the resin composite can be attained, thereby promoting the mixing and/or dispersion.
7) Although there is provided the seal structure for sealing an entire part of the GF supply unit **50** in which the seal member **55** holding the fiber-supply roller **54** is pushed against the cylinder barrel **11a** (around the opening of the reinforcement-fiber supply portion **14)** in the first embodiment, a resilient member **59** with a rubber resiliency may be applied for sealing. For example, as shown in FIG. **9****,** a cork-shaped rubber or resilient member **59** with a center through hole **59a** (with its minimum inner diameter smaller than the diameter of the glass fiber **3)** is pushed against the cylinder barrel **11a,** in which the reinforcement fiber **3** is supplied through the center hole **59a,** so the seal structure with proper fluid- or air-tightness can be provided. Herein, a pushing face of the resilient member **59** against the cylinder barrel **11a** is not limited to a flat one that is illustrated in this figure, but it may have a projection in an O-ring shape. Thus, the seal structure (resilient member **59**) is applied locally at the GF supply portion **53** (reinforcement-fiber mixing portion **14),** which may provide the simple seal structure and reduce manufacturing costs properly.

## Claims

1. A molding method of a fiber filler reinforced resin molded article, in which a reinforcement fiber **(3)** and a resin **(2)** are plasticized and kneaded in a material supply cylinder **(11)** including a screw **(12)** with an anti counterflow portion **(13),** and the plasticized resin **(5)** with the reinforcement fiber **(3)** mixed therewith is injected into a cavity **(63)** of a mold **(60),**
wherein the reinforcement fiber **(3)** is mixed with the resin **(2)** in the cylinder **(11)** and a foaming agent **(4)** is supplied into the cylinder **(11)** at a portion **(15)** substantially downstream of the anti counterflow portion **(13)** of the screw **(12), characterised by**, that the reinforcement fiber is mixed with the resin **(2)** in the cylinder **(11)** and at a portion **(14)** downstream of the anti counterflow portion **(13)** of the screw **(12)**, and wherein the amount of leakage of the foaming agent **(4)** is detected by a flow-amount detecting device **(45)** provided in the leakage path of the foaming agent **(4)** leaking from the reinforcement-fiber mixing portion **(14),** and the amount of the foaming agent **(4)** corresponding to the amount that has leaked is supplemented from the foaming-agent supply portion **(15).**

2. The molding method of a fiber filler reinforced resin molded article of claim 1, wherein the foaming agent **(4)** is a super critical fluid.

3. The molding method of a fiber filler reinforced resin molded article of claim 1 or 2, wherein the reinforcement fiber **(3)** is mixed with the resin **(2)** in the cylinder **(11)** at a portion **(14)** that is located substantially downstream of said supply portion **(15)** of the foaming agent **(4).**

4. The molding method of a fiber filler reinforced resin molded article of any one of the preceding claims, wherein the reinforcement fiber **(3)** is provided independently so as to be mixed with the resin **(2).**

5. The molding method of a fiber filler reinforced resin molded article of claim 4, wherein the reinforcement fiber **(3)** is provided in a form of a continuous fiber to the cylinder **(11),** and the provided continuous fiber **(3)** is cut into pieces by the screw **(12),** whereby the reinforcement fiber **(3)** is mixed with the resin **(2)** in the cylinder **(11).**

6. The molding method of a fiber filler reinforced resin molded article of any one of the preceding claims, wherein mixing and dispersion of the reinforcement fiber **(3)** in the resin **(5)** is promoted in a resin flow path from the supply portion **(15)** of the foaming agent **(4)** to the cavity **(63)** of the mold **(60).**

7. The molding method of a fiber filler reinforced resin molded article of any one of the preceding claims, wherein the resin **(5)** with the foaming agent **(4)** supplied thereto and the reinforcement fiber **(3)** mixed therewith is collected temporarily, transmitted to an injection unit **(30),** metered for molding, and then supplied to the cavity **(63)** of the mold **(60)** via the injection unit **(30).**

8. A molding apparatus **(1; 1A)** of a fiber filler reinforced resin molded article, in which a reinforcement fiber (3) and a resin **(2)** are plasticized and kneaded in a material supply cylinder **(11)** including a screw **(12)** with an anti counterflow portion **(12),** and the plasticized resin **(5)** with the reinforcement fiber **(3)** mixed therewith is injected into a cavity **(63)** of a mold **(60),** the molding apparatus **(1; 1A)** comprising:
a reinforcement-fiber mixing portion **(14)** where the reinforcement fiber **(3)** is mixed with the resin **(2)** in the cylinder **(11),** the mixing portion **(14)** being downstream of the anti counterflow portion **(13)** of the screw **(12);** and
a foaming-agent supply portion **(15)** where a foaming agent **(4)** is supplied into the cylinder **(11),** the supply portion **(15)** being substantially downstream of the anti counterflow portion **(13)** of the screw **(12), characterised by**, that
there is provided a flow-amount detecting device **(45)** that is provided in a leakage path of the foaming agent **(4)** leaking from the reinforcement-fiber mixing portion **(14)** and detects an amount of leakage of the foaming agent **(4),** and the foaming agent **(4)** is configured to be supplemented from the foaming-agent supply portion **(15)** substantially according to the leakage amount thereof detected by the flow-amount detecting device **(45).**

9. The molding apparatus **(1; 1A)** of a fiber filler reinforced resin molded article of claim 8, wherein the foaming agent **(4)** is a super critical fluid.

10. The molding apparatus **(1; 1A)** of a fiber filler reinforced resin molded article of claim 8 or 9, wherein the reinforcement fiber **(3)** is mixed with the resin **(2)** in the cylinder **(11)** at a portion **(14)** that is located downstream of said supply portion **(15)** of the foaming agent **(4).**

11. The molding apparatus **(1; 1A)** of a fiber filler reinforced resin molded article of any one of claims 8 through 10, wherein the reinforcement fiber **(3)** is provided independently so as to be mixed with the resin **(2).**

12. The molding apparatus **(1; 1A)** of a fiber filler reinforced resin molded article of claim 11, wherein the reinforcement fiber **(3)** is provided in a form of a continuous fiber to the cylinder **(11),** and the provided continuous fiber **(3)** is cut into pieces by the screw **(12),** whereby the reinforcement fiber **(3)** is mixed with the resin **(2)** in the cylinder **(11).**

13. The molding apparatus **(1; 1A)** of a fiber filler reinforced resin molded article of any one of claims 8 through 12, wherein there is provided a mixing-dispersion promoting device **(70; 36A; 36B; 37; 67)** to promote mixing and dispersion of the reinforcement fiber **(3)** in the resin **(2)** in a resin flow path from the supply portion **(15)** of the foaming agent **(4)** to the cavity **(63)** of the mold **(60).**

14. The molding apparatus **(1)** of a fiber filler reinforced resin molded article of any one of claims 8 through 13, wherein the resin **(5)** with the foaming agent **(4)** supplied thereto and the reinforcement fiber **(3)** mixed therewith is collected temporarily, transmitted to an injection unit **(30),** metered for molding, and then supplied to the cavity **(63)** of the mold **(60)** via the injection unit **(30).**

15. The molding apparatus **(1; 1A)** of a fiber filler reinforced resin molded article of any one of claims 8 through 14, wherein there is provided a seal device **(55; 59)** to seal an inside from an outside of the cylinder **(11)** at the reinforcement-fiber mixing portion **(14).**

## Patentansprüche

1. Formverfahren für einen mit Faserfüllstoff verstärkten Harzformgegenstand, worin eine Verstärkungsfaser (3) und ein Harz (2) in einem Materialzuführzylinder (11), einschließlich einer Schraube (12) mit einem Anti-Gegenstromabschnitt (13), plastifiziert und geknetet werden und das plastifizierte Harz (5) mit der damit gemischten Verstärkungsfaser (3) in einen Hohlraum (63) einer Form (60) injiziert wird,
wobei die Verstärkungsfaser (3) mit dem Harz (2) in dem Zylinder (11) gemischt wird, und ein Treibmittel bzw. Schaummittel in den Zylinder (11) an einem Abschnitt (15) im wesentlichen stromabwärts des Anti-Gegenstromabschnitts (13) der Schraube (12) zugeführt wird, **dadurch gekennzeichnet, daß** die Verstärkungsfaser mit dem Harz (2) in dem Zylinder (11) an einem Abschnitt (14) stromabwärts des Antigegenstromabschnitts (13) der Schraube (12) gemischt wird, und wobei der Anteil an Entweichen bzw. Ausströmen des Treibmittels (4) durch eine Fließmengendetektionsvorrichtung (15), angeordnet in der Entweichstrecke des Treibmittels (4), welches aus dem Verstärkungsfaser-Mischabschnitts (14) entweicht, detektiert wird, und die Menge des Treibmittels (14), entsprechend der Menge, die entwichen ist, aus dem Schäummittel-Zuführabschnitt (15) ergänzt wird.

2. Formverfahren für einen mit Faserfüllstoff verstärkten Harzstoffgegenstand gemäß Anspruch 1, wobei das Treibmittel (4) ein überkritisches Fluid ist.

3. Formverfahren für einen mit Faserfüllstoff verstärkten Harzstoffgegenstand gemäß Anspruch 1 oder 2, wobei die Verstärkungsfaser (3) mit dem Harz (2) in dem Zylinder (11) an einem Abschnitt (14) gemischt wird, der im wesentlichen stromabwärts des Zuführabschnitts (15) des Treibmittels (4) angeordnet ist.

4. Formverfahren für einen mit Faserfüllstoff verstärkten Harzstoffgegenstand gemäß einem der vorhergehenden Ansprüche, wobei die Verstärkungsfaser (3) unabhängig angeordnet ist, so daß sie mit dem Harz (2) gemischt wird.

5. Formverfahren für einen mit Faserfüllstoff verstärkten Harzstoffgegenstand gemäß Anspruch 4, wobei die Verstärkungsfaser (3) in einer Form einer kontinuierlichen Faser zu dem Zylinder (11) bereitgestellt wird, und die bereitgestellte kontinuierliche Faser (3) in Stücke durch die Schraube (12) geschnitten wird, wobei die Verstärkungsfaser (3) mit dem Harz (2) in dem Zylinder (11) gemischt wird.

6. Formverfahren für einen mit Faserfüllstoff verstärkten Harzstoffgegenstand gemäß einem der vorhergehenden Ansprüche, wobei das Mischen und die Dispersion der Verstärkungsfaser (3) in dem Harz (5) in einer Harzfließwegstrecke von dem Zuführabschnitt (15) des Treibmittels (4) zu dem Hohlraum (63) der Form (60) unterstützt wird.

7. Formverfahren für einen mit Faserfüllstoff verstärkten Harzstoffgegenstand gemäß einem der vorhergehenden Ansprüche, wobei das Harz (5) mit dem dazu zugeführten Treibmittel (4) und die damit gemischte Verstärkungsfaser (3) temporär gesammelt wird, zu einer Injektionseinheit (30) überführt wird, zum Formen dosiert wird und anschließend zu dem Hohlraum (63) der Form (60) über die Injektionseinheit (30) zugeführt wird.

8. Formvorrichtung (1, 1A) für einen mit Faserfüllstoff verstärkten Harzformgegenstand, worin eine Verstärkungsfaser (3) und ein Harz (2) in einem Materialzuführzylinder (11), einschließlich einer Schraube (12) mit einem Anti-Gegenstromabschnitt (12), plastifiziert und geknetet werden, und das plastifizierte Harz (5) mit der damit gemischten Verstärkungsfaser (3) in einen Hohlraum (63) einer Form (60) injiziert wird, wobei die Formvorrichtung (1, 1 A) umfaßt:
einen Verstärkungsfaser-Mischabschnitt (14), wobei die Verstärkungsfaser (3) mit dem Harz (2) in dem Zylinder (11) gemischt wird, wobei der Mischabschnitt (14) stromabwärts des Anti-Gegenstromabschnitts (13) der Schraube (12) angeordnet ist, und
einen Treibmittel-Zuführabschnitt (15), bei welchem ein Treibmittel (4) in den Zylinder (11) zugeführt wird, wobei der Zuführabschnitt (15) im wesentlichen stromabwärts des Anti-Gegenstromabschnitts (13) der Schraube (12) angeordnet ist, **dadurch gekennzeichnet, daß** eine Fließmengendetektionsvorrichtung (45) vorgesehen ist, die in einer Ausweichwegstrecke des Treibmittels (4), welches von dem Verstärkungsfaser-Mischabschnitt (14) entweicht, angeordnet ist und eine Menge des Entweichens des Treibmittels (4) detektiert, und wobei das Treibmittel (4) konfiguriert ist, von dem Treibmittelzuführabschnitt (15) im wesentlichen gemäß der Entweichmenge davon, detektiert durch die Fließmengen-Detektionsvorrichtung (45), ergänzt zu werden.

9. Formvorrichtung (1, 1A) für einen mit Faserfüllstoff verstärkten Harzformgegenstand, wobei das Treibmittel (4) ein superkritisches Fluid ist.

10. Formvorrichtung (1, 1A) für einen mit Faserfüllstoff verstärkten Harzstoffgegenstand gemäß Anspruch 8 oder 9, wobei die Verstärkungsfaser (3) mit dem Harz (2) in dem Zylinder (11) an einem Abschnitt (14) gemischt wird, der im wesentlichen stromabwärts des Zuführabschnitts (15) des Treibmittels (4) angeordnet ist.

11. Formvorrichtung (1, 1A) für einen mit Faserfüllstoff verstärkten Harzstoffgegenstand gemäß einem der Ansprüche 8 bis 10, wobei die Verstärkungsfaser (3) unabhängig angeordnet ist, so daß sie mit dem Harz (2) gemischt wird.

12. Formvorrichtung (1, 1A) für einen mit Faserfüllstoff verstärkten Harzstoffgegenstand gemäß Anspruch 11, wobei die Verstärkungsfaser (3) in einer Form einer kontinuierlichen Faser zu dem Zylinder (11) bereitgestellt wird, und die bereitgestellte kontinuierliche Faser (3) in Stücke durch die Schraube (12) geschnitten wird, wobei die Verstärkungsfaser (3) mit dem Harz (2) in dem Zylinder (11) gemischt wird.

13. Formvorrichtung (1, 1A) für einen mit Faserfüllstoff verstärkten Harzstoffgegenstand gemäß einem der Ansprüche 8 bis 12, wobei eine Misch-Dispersionsfördervorrichtung (70, 36A, 36B, 37, 67) angeordnet ist, um das Mischen und die Dispersion der Verstärkungsfaser (3) in dem Harz (5) in einer Harzfließwegstrecke von dem Zuführabschnitt (15) des Treibmittels (4) zu dem Hohlraum (63) der Form (60) zu unterstützen.

14. Formvorrichtung (1, 1A) für einen mit Faserfüllstoff verstärkten Harzstoffgegenstand gemäß einem der Ansprüche 8 bis 13, wobei das Harz (5) mit dem dazu zugeführten Treibmittel (4) und die damit gemischte Verstärkungsfaser (3) temporär gesammelt wird, zu einer Injektionseinheit (30) überführt wird, zum Formen dosiert wird und anschließend zu dem Hohlraum (63) der Form (60) über die Injektionseinheit (30) zugeführt wird.

15. Formvorrichtung (1; 1A) für einen mit Faserfüllstoff verstärkten Harzstoffgegenstand gemäß einem der Ansprüche 8 bis 14, wobei eine Abdichtungsvorrichtung (55; 59) angeordnet ist, um eine Innenseite von einer Außenseite des Zylinders (11) an dem Verstärkungsfaser-Mischabschnitt (14) abzudichten.

## Revendications

1. Procédé de moulage d'un article moulé en résine renforcée par charge fibreuse, dans lequel des fibres de renforcement (3) et une résine (2) sont plastifiées et malaxées dans un cylindre d'alimentation de matière (11) comportant une vis (12) avec une partie anti-refoulement (13), et la résine plastifiée (5), les fibres de renforcement (3) étant mélangées à celle-ci, est injectée dans une cavité (63) d'un moule (60),
dans lequel les fibres de renforcement (3) sont mélangées à la résine (2) dans le cylindre (11) et un agent moussant (4) est introduit dans le cylindre (11) au niveau d'une partie (15) sensiblement en aval de la partie anti-refoulement (13) de la vis (12) **caractérisé par le fait que** les fibres de renforcement sont mélangées à la résine (2) dans le cylindre (11) au niveau d'une partie (14) située en aval de la partie anti-refoulement (13) de la vis (12) et dans lequel le volume de fuite de l'agent moussant (4) est détecté par un dispositif de détection de débit (45) agencé sur le trajet de fuite de l'agent moussant (4) s'échappant de la partie de mélange de fibres de renforcement (14), et un volume de l'agent moussant (4) correspondant au volume de la fuite est délivré en complément par la partie d'alimentation en agent moussant (15).

2. Procédé de moulage d'un article moulé en résine renforcée par charge fibreuse selon la revendication 1, dans lequel l'agent moussant (4) est un fluide supercritique.

3. Procédé de moulage d'un article moulé en résine renforcée par charge fibreuse selon la revendication 1 ou 2, dans lequel les fibres de renforcement (3) sont mélangées avec la résine (2) dans le cylindre (11) au niveau d'une partie (14) qui est située sensiblement en aval de ladite partie d'alimentation (15) en agent moussant (4).

4. Procédé de moulage d'un article moulé en résine renforcée par charge fibreuse selon l'une quelconque des revendications précédentes, dans lequel les fibres de renforcement (3) sont délivrées indépendamment de manière à être mélangées à la résine (2).

5. Procédé de moulage d'un article moulé en résine renforcée par charge fibreuse selon la revendication 4, dans lequel les fibres de renforcement (3) sont délivrées sous forme de fibres continues au cylindre (11), et les fibres continues délivrées (3) sont coupées en morceaux par la vis (12), ce par quoi les fibres de renforcement (3) sont mélangées à la résine (2) dans le cylindre (11).

6. Procédé de moulage d'un article moulé en résine renforcée par charge fibreuse selon l'une quelconque des revendications précédentes, dans lequel le mélange et la dispersion des fibres de renforcement (3) dans la résine (5) sont favorisés sur un trajet d'écoulement de résine partant de la partie d'alimentation (15) en agent moussant (4) vers la cavité (63) du moule (60).

7. Procédé de moulage d'un article moulé en résine renforcée par charge fibreuse selon l'une quelconque des revendications précédentes, dans lequel la résine (5) dans laquelle l'agent moussant (4) a été introduit et les fibres de renforcement (3) mélangées est collectée temporairement, transmise à une unité d'injection (30), dosée pour le moulage, et ensuite délivrée à la cavité (63) du moule (60) par l'intermédiaire de l'unité d'injection (30).

8. Dispositif de moulage (1 ; 1A) d'un article moulé en résine renforcée par charge fibreuse, dans lequel des fibres de renforcement (3) et une résine (2) sont plastifiées et malaxées dans un cylindre d'alimentation de matière (11) comportant une vis (12) avec une partie anti-refoulement (12), et la résine plastifiée (5) mélangée aux fibres de renforcement (3) est injectée dans une cavité (63) d'un moule (60), le dispositif de moulage (1 ; 1A) comprenant :
une partie de mélange de fibres de renforcement (14) dans laquelle les fibres de renforcement (3) sont mélangées à la résine (2) dans le cylindre (11), la partie de mélange (14) étant en aval de la partie anti-refoulement (13) de la vis (12) ; et
une partie d'alimentation en agent moussant(15) dans laquelle un agent moussant (4) est introduit dans le cylindre (11), la partie d'alimentation (15) étant sensiblement en aval de la partie anti-refoulement (13) de la vis (12),
**caractérisé par le fait qu'**il est agencé un dispositif de détection de débit (45) qui est placé sur un trajet de fuite de l'agent moussant (4) s'échappant de la partie de mélange de fibres de renforcement (14) et détecte un volume de fuite de l'agent moussant (4), et l'alimentation en agent moussant (4) est configurée de manière à être compensée par la partie d'alimentation en agent moussant (15) sensiblement en fonction du volume de fuite de ce dernier détecté par le dispositif de détection de débit (45).

9. Dispositif de moulage (1 ; 1A) d'un article moulé en résine renforcée par charge fibreuse selon la revendication 8, dans lequel l'agent moussant (4) est un fluide supercritique.

10. Dispositif de moulage (1 ; 1A) d'un article moulé en résine renforcée par charge fibreuse selon la revendication 8 ou 9, dans lequel les fibres de renforcement (3) sont mélangées à de la résine (2) dans le cylindre (11) au niveau d'une partie (14) qui est située en aval de ladite partie d'alimentation (15) en agent moussant (4).

11. Dispositif de moulage (1 ; 1A) d'un article moulé en résine renforcée par charge fibreuse selon l'une quelconque des revendications 8 à 10, dans lequel les fibres de renforcement (3) sont délivrées indépendamment de manière à être mélangées à la résine (2).

12. Dispositif de moulage (1 ; 1A) d'un article moulé en résine renforcée par charge fibreuse selon la revendication 11, dans lequel les fibres de renforcement (3) sont délivrées au cylindre (11) sous la forme de fibres continues, et les fibres continues (3) délivrées sont coupées en morceaux par la vis (12), ce par quoi les fibres de renforcement (3) sont mélangées à la résine (2) dans le cylindre (11).

13. Dispositif de moulage (1 ; 1A) d'un article moulé en résine renforcée par charge fibreuse selon l'une quelconque des revendications 8 à 12, dans lequel un dispositif facilitant mélange et dispersion (70 ; 36A ; 36B ; 37 ; 67) est agencé afin de favoriser le mélange et la dispersion des fibres de renforcement (3) dans la résine (2) sur un trajet d'écoulement de résine à partir de la partie d'alimentation (15) en agent moussant (4) vers la cavité (63) du moule (60).

14. Dispositif de moulage (1) d'un article moulé en résine renforcée par charge fibreuse selon l'une quelconque des revendications 8 à 13, dans lequel la résine (5) avec l'agent moussant (4) ajouté et mélangée aux fibres de renforcement (3) est collectée temporairement, transmise à une unité d'injection (30), dosée pour le moulage, et ensuite délivrée à la cavité (63) du moule (60) par l'unité d'injection (30).

15. Dispositif de moulage (1 ; 1A) d'un article moulé en résine renforcée par charge fibreuse selon l'une quelconque des revendications 8 à 14, dans lequel un dispositif d'étanchéité (55 ; 59) est agencé afin d'assurer l'étanchéité entre l'intérieur et l'extérieur du cylindre (11) au niveau de la partie de mélange de fibres de renforcement(14).
